# EUROPEAN PATENT SPECIFICATION

(11) **EP 2 942 174 B1**
(45) Date of publication and mention of the grant of the patent: **21.09.2016**
(21) Application number: 14167337.6
(22) Date of filing: 07.05.2014
(51) Int. Cl.: B29C 33/42, B29L 31/08

(54) **METHOD OF PREPARING A MOULD FOR VACUUM RESIN TRANSFER MOULDING**
VERFAHREN ZUR HERSTELLUNG EINER FORM FÜR VAKUUMHARZÜBETRAGUNGSFORMUNG
PROCÉDÉ DE PRÉPARATION D'UN MOULE DE MOULAGE PAR TRANSFERT DE RÉSINE SOUS VIDE

(43) Date of publication of application: 11.11.2015
(73) Proprietor: Siemens Aktiengesellschaft, 80333 München (DE)
(72) Inventor: Stege, Jason, 7330 Brande (DK)

(56) References cited:
- EP-A1- 2 388 131
- F. C. Campbell: "Surface preparation" In: "Surface preparation", 1 January 2004 (2004-01-01), Elsevier, XP055052554, ISBN: 978-1-85-617415-2 pages 251-258, * page 253 *

## Description

The invention describes a method of preparing a mould for vacuum resin transfer moulding and its use, use of a peel ply layer for generating a vacuum flow topology at a surface of a mould, and a mould for wind turbine blades.

Wind turbine rotor blades conventionally are manufactured using a technique such as the closed-mould casting technique in which the entire blade can be moulded. Glass fibre matting is used to build up component layers in a suitably shaped mould, and the layers of matting are bonded with a resin and cured in the mould to give a fibre-reinforced polymer or glass-reinforced plastic, generally referred to simply as 'fibreglass'.

To facilitate releasing the finished fibreglass component after curing, the mould is usually coated with a release agent such as a suitable wax so that the resin does not bond with the mould. The release agent is applied to the mould before building up the fibreglass layers. Known release agents are polyvinyl alcohol, silicone wax, slip wax, etc. The release agent must be applied in a uniform layer, and this layer must be absolutely smooth if the outer surface of the cured blade is also to be smooth. However, it is not easy to apply the release agent so that these requirements are met, and the result can be an uneven or dimpled component surface. Alternatively, surface treatments or other strategies to minimize the chemical bonding of the component layers to the mould surface are conventionally used for facilitating the detaching process of the casted blade.

In EP 238 131 A1, a method of moulding a wind turbine blade in a mould is described, in which the component layers of the blade body are casted onto a plastic film held in pace with vacuum, also called vacuum film. More particularly, the method comprises the steps of applying a film to an inside surface of a mould, assembling component layers for the wind turbine blade on the film, performing curing steps to harden the component layers, and subsequently detaching the cured wind turbine blade from the mould. This method is advantageous to a method using a releasing agent because of decreasing the structural requirements of a mould, improving the surface quality of the casting, and reducing cycle time.

However, when casting on a vacuum film, it is necessary to hold the vacuum film to the mould during the casting process. Especially, there are two main challenges when using a vacuum film, namely avoiding wrinkles in the vacuum film and allowing vacuum flow under the vacuum film.

It is therefore an object of the invention to provide an improved mould for a vacuum transfer moulding process, and especially for a mould for manufacturing a wind turbine blade, and, thereby, overcoming the problems mentioned above.

The object of the invention is achieved by the method of preparing a mould according to claim 1, the use of claim 10, the use of a peel ply layer according to claim 11, and the mould for wind turbine blades according to claim 14.

A method according to the invention of preparing a mould having a moulding cavity surface with vacuum flow topology for vacuum resin transfer moulding comprises the steps of pressing a number of peel ply layers into an uncured resin layer for building up the moulding cavity surface, curing the resin of the resin layer, and detaching the peel ply layers to generate the vacuum flow topology in the moulding cavity surface.

An obvious advantage of the method is that the method creates an even surface topology on the surface of the moulding cavity. This surface topology can be used in any vacuum tight mould and is not restricted to mould for wind turbine blades even if the following description mostly refers to those moulds.

The even surface topology created comprises a pattern of fine channels on the surface that allows vacuum to remove all air pockets from under a vacuum film generally used in vacuum assisted resin transfer processes. This advantageous is achieved by the sufficiently regular pattern of fine channels in the mould surface allowing vacuum to reach most or nearly every part of the area underneath the vacuum film, in other words between the vacuum film and the mould surface in the moulding cavity. Thus, in contrast to a mould having a smooth mould surface, the problem of air pockets and regions ain the corners where no vacuum can be applied can easily be improved by the even surface topology created by the method according to the invention.

Due to the improved vacuum generation all over the mould surface in the moulding cavity, wrinkles in a vacuum film can be avoided at the same time, especially, when using a flexible vacuum film, for example made from polyvinyl alcohol (PVA), in a subsequent use of a mould prepared with such a new surface topology.

Further advantages of this technology using a vacuum film obviates the need for a release agent, so that it is no longer necessary to coat the inside surface (or 'interior surface') of the mould with a release agent, and it is no longer necessary to remove remnants of a release agent from the cured wind turbine blade. In this way, considerable savings can be made in the manufacturing process, without having to use an expensively prepared mould. Instead, a single sheet of film can simply be laid out to line the mould. After curing of the moulded wind turbine blade, the film can easily be detached from the wind turbine blade or it can be simply left on the surface, for example if a bondable film like a thermoplastic polyurethane (TPU) film is used for the vacuum film. It can be tinted/opaque or simply painted over and used as a type of primer.

Thus, the specific mould topology prepared according to the method of the invention has a lot of advantageous when used in a mould for moulding wind turbine blades. The specific vacuum assisted resin transfer will not be described in detail as this is already sufficiently described in EP 2 388 131 A1 which is included herein by reference.

According to a further aspect of the invention, the invention relates to the use of the above-described method for preparing a new mould for wind turbine blades. The thus prepared moulds have the advantageous new vacuum flow topology. Thus, the thus obtained moulds can advantageously be used in vacuum assisted resin transfer processes, for example for moulding wind turbine blades.

Alternatively, the method of the invention as described beforehand can also be used for generating a new vacuum flow topology in a mould, for example an existing or old mould having a conventional smooth surface, and especially for moulds suitable for the preparation of wind turbine blades. Thus, it is easily possible to use a mould with a surface treated with a releasing agent in the conventional processes in the past and providing this mould with a new vacuum flow topology by using the method according to the invention.

It is further advantageous that the method of the invention can thus be used to regenerate old mould as well. If the surface is damaged, it is possible to repair the surface without the need of additional post-preparation steps by applying a new surface topology on the mould when exercising the method according to the invention.

It is a further aspect of the invention to use a peel ply for generating a vacuum flow topology at a surface of a mould for wind turbine blades. Thereby, the above-described advantageous can be achieved when using a peel ply with a specific thread structure for generating vacuum flow channels in the mould surface, thereby generating the vacuum flow topology. By using the peel ply, an even pattern, in particular, a sufficiently regular pattern can be created in the resin layer of a mould when the resin has been cured.

Accordingly, the invention also provides a mould for wind turbine blades having a novel vacuum flow topology. The mould according to the invention can be prepared by a method of the invention as has been described before. Especially, by the steps of pressing a number of peel ply layers into an uncured resin layer for building up the moulding cavity surface, curing the resin of the resin layer, and detaching the peel ply layers, the specific vacuum flow topology in the moulding cavity surface can be generated.

Particularly advantageous embodiments and features of the invention are given by the dependent claims, as revealed in the following description. Features of the embodiments may be combined as desired to arrive at further embodiments.

The method of preparing a mould according to the invention advantageously uses the fabric pattern of peel plies to create a vacuum flow channel pattern on the surface of the moulding cavity of a mould. When a new mould with this specifically textured surface is to be prepared, the usual process of packing a number of composite fibre layers on a plug for forming the moulding cavity can be started with using a peel ply layer as a first layer. More particularly, the peel ply layers are packed on a plug used for forming the moulding cavity, followed by assembling the resin for the resin layer and the further mould forming layers on the peel ply layers thereby pressing the peel ply layers into the uncured resin layer. After assembling the further mould forming layers on this first layer of peel plies, the resin can be cured and the peel ply layer can be detached or removed from the mould leaving the specific vacuum flow topology on the surface of the mould, especially at the moulding cavity. Hence, the method of the invention is suitably used to modify the common processes for preparing moulds for vacuum assisted resin transfer moulding processes. The advantage is that you need only a few more steps compared to the common processes for preparing a mould, but you can integrally provide the surface with a flow channel topology.

Conventionally these flow channels have been prepared by cutting or milling flow channels into the smooth surface which are then connected to the vacuum nozzles through which the air is drawn out from between a vacuum film and the smooth inside surface of the mould. Hence, the new method has the advantage that fewer steps are necessary and the surface topology is more regular due to the even pattern of vacuum flow channels.

In this method, the mould forming layers preferably consist of the usual materials such as resin composite layers. Therefore, the step of assembling further mould forming layers preferably comprises laying up a number of such resin composite layers such as, for example, fibreglass layers.

After curing the resin layer and the resin of the composite layers, the mould formed by curing the resin layer can be de-moulded from the plug before or together with the detaching of the peel ply layers from the cured resin layer. Depending on the properties of the resin material and the used peel ply, especially, depending on the adhesion forces between the peel ply and the resin, this step will be done automatically when detaching the mould from the plug.

Alternatively, the method of the invention can be used to provide a surface of an existing mould or a separately prepared mould with a vacuum flow topology. In this alternative embodiment, the method preferably comprises the step of applying a resin layer on a part of the surface or the total surface of a moulding cavity of a mould. The surface can be treated or cleaned before this step in order to prepare the surface to this step. If the resin used for preparing the specific topology needs a specific pre-treatment to adhere to the mould surface, it is possible to make a pre-treatment with specific primers or mechanical preparations or the like.

After the applying of the resin layer, a number such as one, two, or even more (e.g. three, four, or a plurality of up to 10 or more) of peel ply layers is arranged on the resin layer. The peel ply layer arranged on the resin layer as the uppermost layer is the layer imparting the texture pattern to the resin and is, therefore, selected such that the texture allows the creation of a sufficient vacuum flow channel pattern after the curing of the resin and the detaching of the peel ply from the cured resin layer.

After the peel ply layers have been assembled in or on the resin layer, a vacuum film or foil, such as a plastic foil, can be arranged onto the peel ply layers in order to tightly close the layered composite structure thus generated. Vacuum can then be applied to the mould and the peel ply layers are thereby pressed into the resin layer.

After having cured the resin of the resin layer, for example by heating the layered composite structure or by applying any other suitable curing process, the peel ply layers and the vacuum film can be detached to generate or to leave the vacuum flow topology in the moulding cavity surface made of the cured resin. Exemplified resins for the resin layer which can suitably cured by heat thermosetting resins such as epoxy resins.

In order to improve the impregnation of the peel plies, the method according to a further embodiment comprises the optional step of impregnating the peel ply layers with an excess of resin. Excess resin means that for example an additional layer of resin can be rolled on top of the peel plies in order to guarantee that the peel plies are sufficiently saturated with resin so that no part of the peel plies remains without resin impregnation. It is important to know that the topology can only be achieved if the peel plies are fully pressed into the resin and thereby transferring the texture structure to the resin.

Especially in case an excess of resin is used, it is advantageous to place a filter material layer on the peel ply layers to remove excess resin. The filter material layer may be of any material which is suitable for sucking of resin. An exemplified filter material is known under the trademark Compoflex^{®}. Compoflex^{®} is a polypropylene filter material.

A further advantage of the filter material layer is that the additional layer ensures a sufficiently and tightly pressing of the peel plies against the mould. The filter material layer, thus, serves as a layer evening out the pressure forces all over the peel ply layer. This improves the vacuum flow topology of the created resin layer.

By the use of the above-described method of preparing a mould for wind turbine blades or for generating a new vacuum flow topology in a mould for wind turbine blades, or by the use of a peel ply layer for generating a vacuum flow topology at a surface of a mould for wind turbine blades, it is preferred to use peel ply layers comprising peel plies with two or more intersecting sets of threads. The fabric pattern with these threads enforces vacuum flow along the direction of the threads during the application of vacuum in the wind turbine bald moulding process. In exemplified peel plies the threads are arranged in two intersecting sets of threads. Preferably, the threads are arranged at an angel of about 80 to 100 degrees, more preferably the two set of threads are crossing each other nearly at an perpendicular angle (perpendicular means in this regard about 90 degrees ± 5 degrees).

The texture pattern results in a very even pattern transferred to the mould surface. Generally, the weave of the fabric determines how "fine" the pattern is. In other words, the pattern has a light or faint patterned structure. More particularly, the roughness of the surface depends on the filament structure and thickness of the peel plies used. The skilled person knows which peel ply may be favourable for the vacuum flow topology of the mould to be prepared depending on the device to be moulded. The skilled person can then select the desired peel ply layers freely available on the market.

Due to this specific vacuum flow topology of the mould surface prepared by the methods and uses of the present invention, a mould with this specific surface topology would require a structure with a smaller roughness than a mould using a traditional release agent for de-moulding. With the vacuum flow topology prepared according to the invention, when the vacuum is cut, the casting, for example of a wind turbine blade, is only held in place by gravity. The force of de-moulding is almost non-existent. Therefore, with this new mould surface topology, the de-moulding process is easier even if no release agent is used. Thus, the moulds are improved for the use in vacuum assisted resin transfer moulding processes, and especially for moulding wind turbine blades.

In addition, when removing the vacuum before the casting is de-moulded, any force other than gravity holding the casting in place of the moulding cavity and, therefore the stress on the mould from the de-moulding process is substantially reduced. One reason may be the chemical bond from the casting with the vacuum film instead of the surface of the mould. This improves the post-curing steps and, thus, also the whole casting process when using a mould according to the present invention.

As release agents are not necessary due to the specific surface topology of the mould cavity the production time can be significantly reduced. Additional advantages are that the uncertainty with paint adhesion onto the surface of a casted product, such as a wind turbine blade can be reduced as well because there is no need of additional chemical processing aids. Vacuum films are usually designed to release from resin very easily because of their non-sticking properties, but there is no need for that here. If a bondable film like thermoplastic polyurethane (TPU) is used for the vacuum film, it can be simply left on the surface of the casted product. After the de-moulding, the casted product with the vacuum film can be tinted or opaque. For example, the vacuum film can simply painted over and used as a type of primer. Additionally the bonded vacuum film can be used as protecting film in the finished product.

If the casted product shall have a smooth and consistent surface texture, the use of the mould of the invention is suitable to provide such a surface without any post-processing or finishing steps such as sanding or sand-blasting. Preferably, the topology of the casted product achieved in this method is considered as smooth as necessary for the intended applications, especially if the vacuum film is left on the surface of the product. Advantageously, a painting or priming for finishing is not necessary due to the smooth surface.

Other objects and features of the present invention will become apparent from the following detailed descriptions considered in conjunction with the accompanying drawings. It is to be understood, however, that the drawings are designed solely for the purpose of illustration and not as a definition of the limits of the invention.

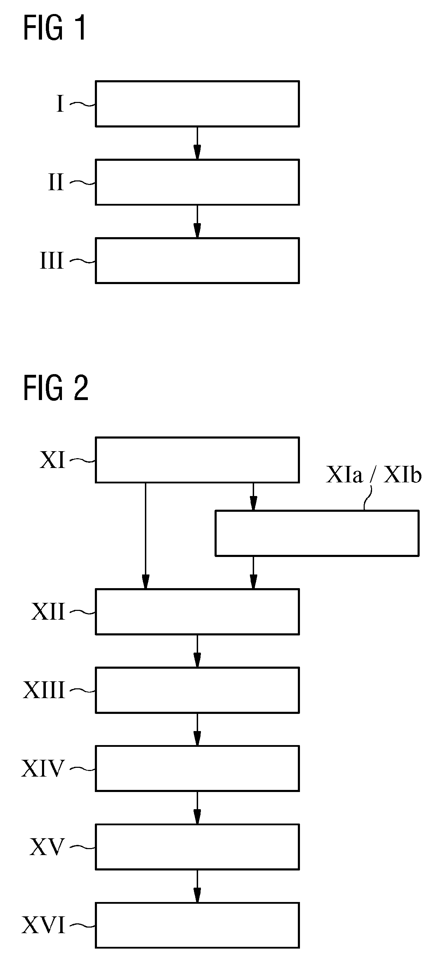

Fig. 1 and Fig. 2 show block diagrams of two alternative embodiments of the method according to the present invention.

Figure 1 shows a block diagram describing the steps used for preparing a mould according to the invention during the manufacturing process of a mould. The method of preparing a mould having a moulding cavity surface with vacuum flow topology for vacuum resin transfer moulding starts with step I in which a number of peel ply layers are pressed into an uncured resin layer of a mould just prepared. The peel ply layers are pressed into the uncured resin surface for building up the moulding cavity surface, more specifically for generating the specific pattern in the resin when cured.

In the next step, step II, the resin of the resin layer is cured so that the internal resin structure is hardened.

Thereafter, the peel ply layers are detached in step III to generate the vacuum flow topology in the moulding cavity surface. More specifically, the topology is a negative of the texture of the peel ply. The roughness of the structure highly depends on the used peel ply filaments and structure.

Fig. 2 shows a block diagram of an alternative for providing a mould with a vacuum flow topology. Step XI includes a step of applying a resin layer on a part of the surface or the total surface of a moulding cavity, for example of a mould to be improved or adapted to an improved moulding process technology. In step XI, an uncured resin surface is generated which, then, can be used for arranging a number of peel ply layers on the resin layer.

Optional steps XIa and XIb can be carried out. Step XIa comprises the step of impregnating the peel ply layers with an excess of resin in order to saturate the peel ply layers with resin material. When an excess resin is used, it is preferred that a filter material layer is placed on the peel ply layers in optional step XIb in order to bind excess resin material before the next step is carried out.

Thereafter, in step XII, a vacuum film is arranged onto the peel ply layers, before vacuum is applied to the mould in step XIII. When applying vacuum, the peel ply layers are pressed into the resin layer in step XIV.

Step XV describes the curing of the resin of the resin layers in order to generate a stable resin matrix at the resin surface without binding to the peel ply layers.

The specific vacuum flow topology in the moulding cavity surface is then generated by detaching the peel ply layers and the vacuum film from the cured resin surface in step XVI.

The generated topology is again a negative of the texture of the peel ply layers, wherein the roughness of the structure highly depends on the used peel ply filaments and their general fibre structure.

Although the present invention has been disclosed in the form of preferred embodiments and variations thereof, it will be understood that numerous additional modifications and variations could be made thereto without departing from the scope of the invention. For example, instead of curing by heat, the resin can be a two-component hardening resin or a resin hardening under light exposure. The mould of the invention can alternatively be used in any other vacuum assisted resin transfer moulding processes and is not bound to wind rotor blade moulding processes.

For the sake of clarity, it is to be understood that the use of "a" or "an" throughout this application does not exclude a plurality, and "comprising" does not exclude other steps or elements.

## Claims

1. A method of preparing a mould having a moulding cavity surface with vacuum flow topology for vacuum resin transfer moulding, which method comprises the steps of:
- pressing a number of peel ply layers into an uncured resin layer for building up the moulding cavity surface,
- curing the resin of the resin layer, and
- detaching the peel ply layers to generate the vacuum flow topology in the moulding cavity surface.

2. The method according to claim 1, wherein the peel ply layers are packed on a plug used for forming the moulding cavity, followed by assembling the resin for the resin layer and the further mould forming layers on the peel ply layers thereby pressing the peel ply layers into the uncured resin layer.

3. The method according to claim 2, wherein the step of assembling further mould forming layers comprises laying up a number of fibreglass layers.

4. The method according to claim 2 or 3, further comprising the step of de-moulding the mould formed by curing the resin layer from the plug before or together with the detaching of the peel ply layers from the cured resin layer.

5. The method according to claim 1, which method comprises the steps of:
- applying a resin layer on a part of the surface or the total surface of a moulding cavity of a mould,
- arranging a number of peel ply layers on the resin layer,
- arranging a vacuum film onto the peel ply layers,
- applying vacuum to the mould and thereby pressing the peel ply layers into the resin layer,
- curing the resin of the resin layers, and
- detaching the peel ply layers and the vacuum film to generate the vacuum flow topology in the moulding cavity surface.

6. The method according to claim 5, further comprising the step of impregnating the peel ply layers with an excess of resin.

7. The method according to claim 5 or claim 6, further comprising the step of placing a filter material layer on the peel ply layers.

8. Use of the method according to any of the preceding claims for preparing a new mould for wind turbine blades or for generating a new vacuum flow topology in a mould for wind turbine blades.

9. Use of a peel ply layer for generating a vacuum flow topology at a surface of a mould for wind turbine blades.

10. The use according to claim 9, wherein the peel ply layers comprises peel plies with two or more intersecting sets of threads.

11. The use according to claim 10, wherein two intersecting sets of threads are arranged at an angel of about 80 to 100 degrees.

12. Mould for wind turbine blades having a vacuum flow topology prepared by a method comprising the steps of:
- pressing a number of peel play layers into an uncured resin layer for building up the moulding cavity surface,
- curing the resin of the resin layer, and
- removing the peel ply layers to generate the vacuum flow topology in the moulding cavity surface.

13. Mould for wind turbine blades according to claim 12, wherein the vacuum flow topology comprises a fabric pattern with vacuum flow directions along channels generated by threads of the peel plies.

## Patentansprüche

1. Verfahren zur Herstellung einer Form, die eine Formhohlraumoberfläche mit Vakuumfluss-Topologie aufweist, für vakuumunterstütztes Harztransferformen, wobei das Verfahren die folgenden Schritte aufweist:
- Pressen einer Anzahl von Abreißgewebeschichten in eine ungehärtete Harzschicht zum Aufbauen der Formhohlraumoberfläche,
- Härten des Harzes der Harzschicht, und
- Ablösen der Abreißgewebeschichten, um die Vakuumfluss-Topologie in der Formhohlraumoberfläche zu erzeugen.

2. Verfahren nach Anspruch 1, wobei die Abreißgewebeschichten auf einen Stopfen gepackt werden, der zum Formen des Formhohlraums verwendet wird, gefolgt vom Aufbringen des Harzes für die Harzschicht und der weiteren Schichten zum Ausbilden der Form auf die Abreißgewebeschichten, wodurch die Abreißgewebeschichten in die ungehärtete Harzschicht gepresst werden.

3. Verfahren nach Anspruch 2, wobei der Schritt des Aufbringens weiterer Schichten zum Ausbilden der Form das Auflegen einer Anzahl von Fiberglasschichten umfasst.

4. Verfahren nach Anspruch 2 oder 3, welches ferner den Schritt des Entformens der durch Härten der Harzschicht gebildeten Form von dem Stopfen vor dem oder zusammen mit dem Ablösen der Abreißgewebeschichten von der Schicht aus gehärtetem Harz umfasst.

5. Verfahren nach Anspruch 1, wobei das Verfahren die folgenden Schritte umfasst:
- Auftragen einer Harzschicht auf einem Teil der Oberfläche oder der Gesamtoberfläche eines Formhohlraums einer Form,
- Anordnen einer Anzahl von Abreißgewebeschichten auf der Harzschicht,
- Anordnen einer Vakuumfolie auf den Abreißgewebeschichten,
- Anlegen von Vakuum an die Form, dadurch Pressen der Abreißgewebeschichten in die Harzschicht,
- Härten des Harzes der Harzschichten, und
- Ablösen der Abreißgewebeschichten und der Vakuumfolie, um die Vakuumfluss-Topologie in der Formhohlraumoberfläche zu erzeugen.

6. Verfahren nach Anspruch 5, welches ferner den Schritt des Tränkens der Abreißgewebeschichten mit einem Überschuss an Harz umfasst.

7. Verfahren nach Anspruch 5 oder Anspruch 6, welches ferner den Schritt des Anordnens einer Filtermaterialschicht auf den Abreißgewebeschichten umfasst.

8. Anwendung des Verfahrens nach einem der vorhergehenden Ansprüche zur Herstellung einer neuen Form für Windenergieanlagen-Rotorblätter oder zum Erzeugen einer neuen Vakuumfluss-Topologie in einer Form für Windenergieanlagen-Rotorblätter.

9. Verwendung einer Abreißgewebeschicht zum Erzeugen einer Vakuumfluss-Topologie an einer Fläche einer Form für Windenergieanlagen-Rotorblätter.

10. Verwendung nach Anspruch 9, wobei die Abreißgewebeschichten Abreißgewebe mit zwei oder mehr sich überkreuzenden Sätzen von Fäden umfassen.

11. Verwendung nach Anspruch 10, wobei zwei sich überkreuzende Sätzen von Fäden unter einem Winkel von etwa 80 bis 100 Grad angeordnet sind.

12. Form für Windenergieanlagen-Rotorblätter, welche eine Vakuumfluss-Topologie aufweist, die durch ein Verfahren hergestellt wird, das die folgenden Schritte umfasst:
- Pressen einer Anzahl von Abreißgewebeschichten in eine ungehärtete Harzschicht zum Aufbauen der Formhohlraumoberfläche,
- Härten des Harzes der Harzschicht, und
- Entfernen der Abreißgewebeschichten, um die Vakuumfluss-Topologie in der Formhohlraumoberfläche zu erzeugen.

13. Form für Windenergieanlagen-Rotorblätter nach Anspruch 12, wobei die Vakuumfluss-Topologie ein Gewebemuster mit Vakuumflussrichtungen entlang von Kanälen, die durch Fäden des Abreißgewebes erzeugt werden, umfasst.

## Revendications

1. Procédé de préparation d'un moule présentant une surface de cavité de moulage ayant une topologie d'écoulement sous vide pour le moulage par transfert de résine sous vide, lequel procédé comprend les étapes consistant à :
- comprimer un certain nombre de couches de plis pelliculables en une couche de résine non durcie pour construire la surface de cavité de moulage,
- faire durcir la résine de la couche de résine, et
- détacher les couches à plis pelliculables pour créer la topologie d'écoulement sous vide sur la surface de cavité de moulage.

2. Procédé selon la revendication 1, dans lequel les couches de plis pelliculables sont tassées sur un bouchon utilisé pour former la cavité de moulage, ce qui est suivi de l'assemblage de la résine destinée à la couche de résine et des autres couches de formation du moule sur les couches de plis pelliculables, de manière à comprimer les couches de plis pelliculables pour obtenir la couche de résine non durcie.

3. Procédé selon la revendication 2, dans lequel l'étape d'assemblage d'autres couches de formation du moule comprend la superposition d'un certain nombre de couches de fibre de verre.

4. Procédé selon la revendication 2 ou 3, comprenant en outre l'étape consistant à démouler du bouchon le moule formé par le durcissement de la couche de résine, avant ou conjointement avec le détachement des couches de plis pelliculables de la couche de résine durcie.

5. Procédé selon la revendication 1, lequel procédé comprend les étapes consistant à :
- appliquer une couche de résine sur une partie de la surface ou sur la surface totale de la cavité de moulage d'un moule,
- disposer un certain nombre de couches de plis pelliculables sur la couche de résine,
- disposer un film à vide sur les couches de plis pelliculables,
- appliquer un vide au moule et de cette manière, comprimer les couches de plis pelliculables pour obtenir la couche de résine,
- faire durcir la résine des couches de résine, et
- détacher les couches de plis pelliculables et le film à vide pour créer la topologie d'écoulement sous vide sur la surface de cavité de moulage.

6. Procédé selon la revendication 5, comprenant en outre l'étape d'imprégnation des couches de plis pelliculables avec un surplus de résine.

7. Procédé selon la revendication 5 ou la revendication 6, comprenant en outre l'étape de mise en place d'une couche de matériau filtrant sur les couches de plis pelliculables.

8. Mise en oeuvre du procédé selon l'une quelconque des revendications précédentes pour préparer un nouveau moule pour pales d'éolienne ou pour créer une nouvelle topologie d'écoulement sous vide dans moule pour pales d'éolienne.

9. Utilisation d'une couche de plis pelliculables pour créer une topologie d'écoulement sous vide sur une surface de moule pour pales d'éolienne.

10. Utilisation selon la revendication 9, dans laquelle les couches de plis pelliculables comprennent des plis pelliculables dotés de deux ensembles de fils se croisant ou plus.

11. Utilisation selon la revendication 10, dans laquelle deux ensembles de fils se croisant sont disposés selon un angle d'environ 80 à 100 degrés.

12. Moule pour pales d'éolienne présentant une topologie d'écoulement sous vide, préparé au moyen d'un procédé comprenant les étapes consistant à :
- comprimer un certain nombre de couches de plis pelliculables en une couche de résine non durcie pour construire la surface de cavité de moulage,
- faire durcir la résine de la couche de résine, et
- enlever les couches de plis pelliculables pour créer la topologie d'écoulement sous vide sur la surface de cavité de moulage.

13. Moule pour pales d'éolienne selon la revendication 12, dans lequel la topologie d'écoulement sous vide comprend une configuration de tissu avec des directions d'écoulement sous vide le long de canaux créés par des fils des plis pelliculables.
